# EUROPEAN PATENT APPLICATION

(11) **EP 4 201 600 A1**
(43) Date of publication of application: **28.06.2023**
(21) Application number: 21383181.1
(22) Date of filing: 21.12.2021
(51) Int. Cl.: B25J 9/00, B25J 9/02, B25J 15/00, B07C 5/00, B07C 5/36

(54) **SYSTEM FOR SORTING OBJECTS COMPRISING A PLURALITY OF CATCHING ELEMENTS**

(71) Applicant: Open Mind Ventures, S.L.U., 08700 Igualada Barcelona (ES)
(72) Inventor: BALSELLS MERCADE, Antoni, 08700 Igualada (Barcelona) (ES); GUIMERÀ PEDROLA, Antoni, 08700 Igualada (Barcelona) (ES); CARRER VIVES, Josep, María, 08700 Igualada (Barcelona) (ES); BALSELLS VIVES, Bernat, 08700 Igualada (Barcelona) (ES)
(74) Representative: Herrero & Asociados, S.L.

(57) **Abstract**

The system for sorting objects comprises a conveyor belt (1) on which the objects to be sorted are placed; at least one detecting element (3) of the objects to be sorted, at least one catching element (2) for catching one or more objects to be sorted and removing them from the conveyor belt (1), at least one collection point (10), and a plurality of catching elements (2) which are independently movable from each other transversely with respect to the conveyor belt (1).

It permits to provide a system for sorting objects, such as waste, that allows for multiple collection of objects.

## Description

The present invention relates to a system for sorting objects, such as waste.

### Background to the invention

Systems are currently available for the capture and sorting of objects or waste. Most of these systems are based on fast robots, known as delta robots, and use suction cup suction mechanisms for capture. Their current application is limited to end-of-line in quality control.

On one hand, these robots are very fast, but their working range is very limited. Thus, if you want to extend the range, you would have to install more robots, with the disadvantage that this implies, as the prices of these robots are usually high.

On the other hand, there are problems associated with suction cup work, such as high energy costs for compressed air, high maintenance, a sail effect on large surface materials and low effectiveness on porous, very irregular, or dirty materials.

WO2020/229458 A1 and WO2021/094640, of the same applicant as this application, describe a system for handling elements, comprising a robotic arm with an attached adapter, the design of which incorporates a punching element for collecting punchable objects, such as municipal waste and refuse.

Although this system described in this document solves the problems associated with the use of suction cups, it does not disclose modular configurations to allow adaptation to requirements, allowing different types of objects to be collected.

### Description of the invention

Therefore, an objective of the present invention is to provide a system for sorting objects, such as waste, which enables multiple collection of objects.

With the classification system of the invention, the aforementioned disadvantages are solved, presenting other advantages that will be described below.

The system for sorting objects according to the present invention comprises:
- a modular conveyor belt on which the objects to be sorted are placed;
- at least one detection element;
- at least one catching element, which enables one or more objects to be caught and removed from the conveyor belt;
- at least one collection point;
characterized in that the sorting system comprises a plurality of catching elements which are independently movable to each other transversally with respect to the conveyor belt.

These catching elements are integrated into a catching head allowing vertical displacement of the catching element.

In accordance with a preferred embodiment, these catching heads can perform a longitudinal movement, in the direction of the conveyor belt, because they are mounted on one or more longitudinal guides, which in turn are mounted in a sliding manner on the transversal guide, said set of elements forming a capture module.

These longitudinal, transversal, and vertical movements of the catching elements are synchronized with the belt movement.

In addition, the catching element is rotatable with respect to the vertical longitudinal axis of the catching element to direct the captured object in the desired orientation.

Advantageously, at least some of the catching heads are tiltable with respect to the conveyor belt, being able to define an acute angle in one direction or the other with the conveyor belt. In addition, the catching heads may comprise one or more tilting springs, which facilitate their tilting and return the catching element to its original position.

In this respect, the catching elements may be provided with a flexible element allowing the tilting of the catching element.

According to alternative embodiments, each catching head may comprise, at one of its ends, in particular at the end closest to the conveyor belt, a catching element such as: a single needle, a multiple needle with gripper effect, a swiveling blade, a suction cup, a magnet, a gripper, a punch with clamping support, a conical punch, a saw punch, an arrow, as well as other similar ones.

The system for sorting objects according to the present invention may also comprise a sharpening element for sharpening one end of the catching elements. Said sharpening element may:
- To be incorporated in the catching head;
- To be in a fixed position, whereby the head must be moved to the sharpening element, in order to perform said sharpening;
- It can be movable, and it can be moved between a rest position and an use position.

If desired, at least some of the catching heads are grouped into sets of multiple catching heads, each set of multiple catching heads comprising two or more catching heads, which may be the same or different from each other.

Preferably, the conveyor belt is formed by brushes made of polymers or other materials, with elastic bristles. Such a conveyor belt comprises distribution means for distributing the objects on the conveyor belt evenly. For example, the distribution means are vertical distribution belts provided with a plurality of through holes or vibration distributors.

In the system for sorting objects according to the present invention, the conveyor belt comprises elements for detecting objects. For example, the elements for detecting objects comprise one or more cameras, arranged at one or more points of the conveyor belt.

In addition, the catching elements are removably mounted, so that they can be easily changed manually or automatically.

With the system for sorting objects according to the present invention, multiple collection is possible, with low operating cost and low maintenance, allowing the objects to be caught by transferring them, as well as access to the objects from the bottom.

The sorting system according to the present invention comprises a software module for optimizing movements based on physical constraints or other parameters, such as quantity, quality or value.

The system, according to the present invention, increases the efficiency of the operation, allows working with higher speeds and wider belts, with more capacity, and allows reducing manual work or supervision.

### Brief description of the drawings

For a better understanding of what has been explained above, some drawings are included in which, schematically and only by way of a non-limiting example, a practical case of embodiment is shown.
Figure 1 is a perspective view of a first embodiment of the sorting system according to the present invention;
Figures 2a/2b show elevation views of different configurations of the catching elements;
Figure 3 shows elevation views of the movements of a catching element and head with respect to the conveyor belt;
Figure 4 shows elevation views of two configurations of spring-loaded tilting catching heads;
Figure 5 is a perspective view of a sharpening element of the catching element, according to a first embodiment;
Figure 6 is a perspective view of a sharpening element of the catching element, according to a second embodiment;
Figure 7 is a perspective view of a catching head, comprising two punch catching elements;
Figure 8 is an elevation view of a multi-catching head assembly, comprising a punch catching element and a suction cup catching element;
Figure 9 shows views of the vertical and rotational movements of a blade-type catching element;
Figure 10 is a perspective view of a possible configuration of the sorting system according to the present invention;
Figure 11 is a plan view of a possible configuration of the sorting system according to the present invention;
Figure 12 is a perspective view of a possible configuration of the sorting system according to the present invention;
Figure 13 is a side elevation view of a possible configuration of the sorting system according to the present invention;
Figure 14 is a perspective view of a conveyor belt with vibration distributors for distributing the objects on the conveyor belt;
Figure 15 is a perspective view of a conveyor belt with a conveyor belt for distributing objects on the conveyor belt;
Figure 16 shows elevation views of a catching element used to collect or catching multiple objects;
Figure 17 is a perspective view of two catching elements used to collect or catch an object;
Figure 18 is a plan view of a sorting system according to the present invention comprising a plurality of detecting elements;
Figures 19 and 20 are elevation views showing the exchange of the catching modules for maintenance.

### Description of preferred embodiments

The system for sorting objects, according to the present invention, comprises a modular conveyor belt 1, made of elastic bristle polymer brushes, which allow multiple ways of catching the material, highlighting:
- Catching by accessing through the upper part of the object, such as punching, suction, pinching, magnetic, among others. In the case of punching the object to be collected, the punch is threaded through the object, so that the punch penetrates the conveyor belt without damaging it due to its construction with elastic bristles.
- Catching by accessing through the lower part of the object, such as grippers with a single blade, grippers with multiple blades as a base and of different sizes depending on the size of the object to be caught, among others. These grippers penetrate between the elastic bristles of the conveyor belt and move until they are positioned under the object and carry out the gripping, collection, and subsequent sorting.

On this conveyor belt 1 are positioned different catching heads 9 provided with catching elements 2. The catching elements 2 can move longitudinally, transversally and/or vertically on this conveyor belt 1.

This is achieved by means of a transverse guide 21, which can be moved along the conveyor belt 1, a longitudinal guide 22, which moves along the transverse guide 21, and the catch heads 9, which move along the longitudinal guide 22, forming these set of pieces a catch module 23.

In addition, each catching element 2 moves vertically, between a rest position, separated from the conveyor belt 1, and a use or catching position, in contact (penetration of the catching element 2 between the elastic bristles forming the brushes of the belt) or in close proximity to the conveyor belt 1, for the collection of an object.

The sorting system of the present invention is multiple and modular, increasing the productivity and flexibility and allowing the system to be adapted to the customer needs in a progressive manner, enabling the customer needs to be covered throughout the life of the product. This is so since it allows to add, exchange, remove for maintenance, in a quick and simple way, catching modules 23 in an already existing system, and at the same time it allows, in the same way, to add, exchange, remove for maintenance, etc. catching heads 9 or catching elements 2.

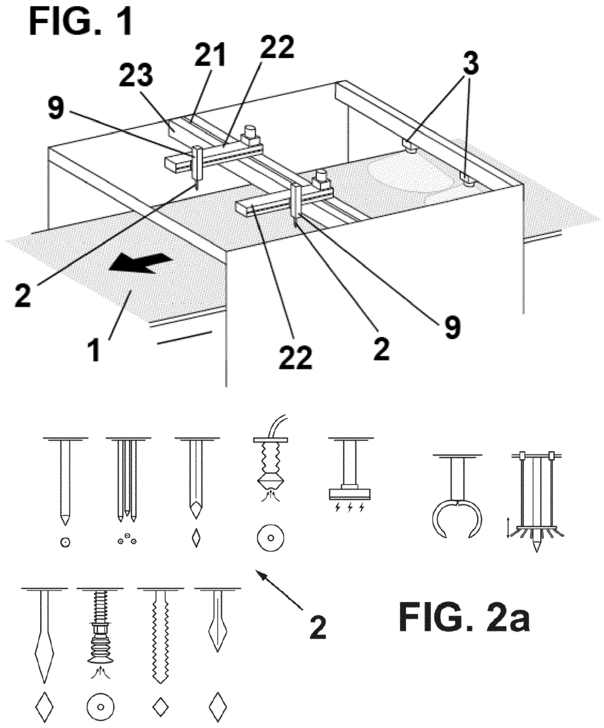

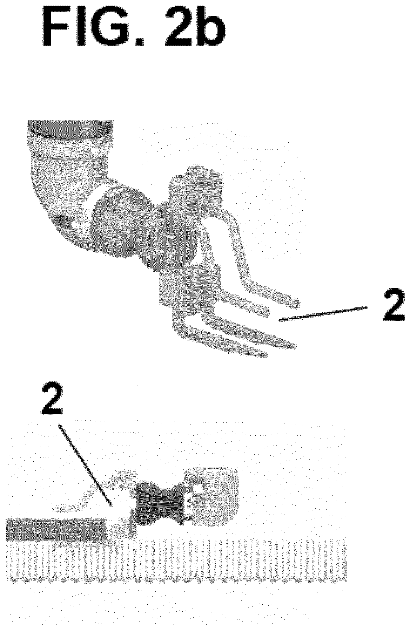

For catching of the objects, different catching elements 2 can be provided according to the requirements of the material, as shown in figures 2a and 2b.

Figure 2a shows different catching elements 2 for access to the top of the object, namely, in order from left to right, a single needle, a multiple needle with gripper effect, a swiveling blade, a suction cup, a magnet, a gripper, a punch with holder, a conical punch, a spring-loaded suction cup, a saw punch and an arrow.

Figure 2b shows different catching elements 2 for access to the bottom of the object.

Catching elements 2 can be driven with or without variable speed, with mechanical or electronic position control, e.g., worm, connecting rod, rack and pinion, linear motor, etc.

The punch catching elements 2 may have means of securing the material prior to punching, to prevent objects from escaping as the punch contacts and penetrates the object.

The punch catching elements 2 may include elements for the release of the punched residue, which may be attached to the head or external to it.

Catching elements 2 can have different movements and paths in order to collect more efficiently.

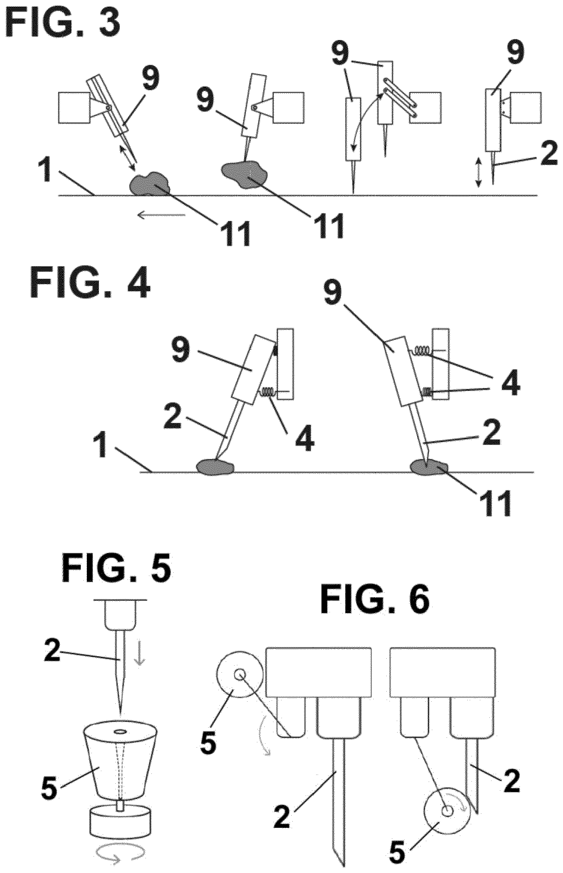

These movements are shown in figure 3, which are, from left to right, against the grain, for hair, synchronized with the movement of the belt, fast static.

That is to say, different movements can be made to improve the penetration of the punching elements 2 by synchronizing or opposing them to the movement of the conveyor belt 1.

The catching element 2 with punch can penetrate the object at a certain inclination with respect to the horizontal plane of the conveyor belt 1.

As shown in Figure 4, the catching head may incorporate one or more springs 4 to dampen impact, increase collecting efficiency, reduce twisting of the components due to simultaneous penetration of the tape feed, etc. This flexibility may also be at the bottom of the head or at the top of the catching element 2, affecting only the punch or other catching element.

Advantageously, these catching elements 2 are easily interchangeable for maintenance and replacement. This exchange could even be done automatically with an exchanger. One and the same catching element could contain different grippers that move laterally in solidarity with each other.

As can be seen in figures 5 and 6, each catching head 9 may comprise a sharpening element 5, which may be stationary with respect to the transverse axis of the catching element 2 (figure 5) or movable, located on the catching head 9 itself (figure 6), so that automatic sharpening can be programmed in order to obtain a sharp penetration in the object during capture.

Preferably, the sorting system according to the present invention is modular and scalable.

This means that the sorting system will be formed from a conveyor belt 1 and a number of catching modules 23, multiple catching heads 9, catching elements 2 and material collection points 10, to meet the speed and sorting needs of each case. As the needs of the sorting system change, any of the aforementioned parts or modules constituting the sorting system can be easily added, removed, or changed.

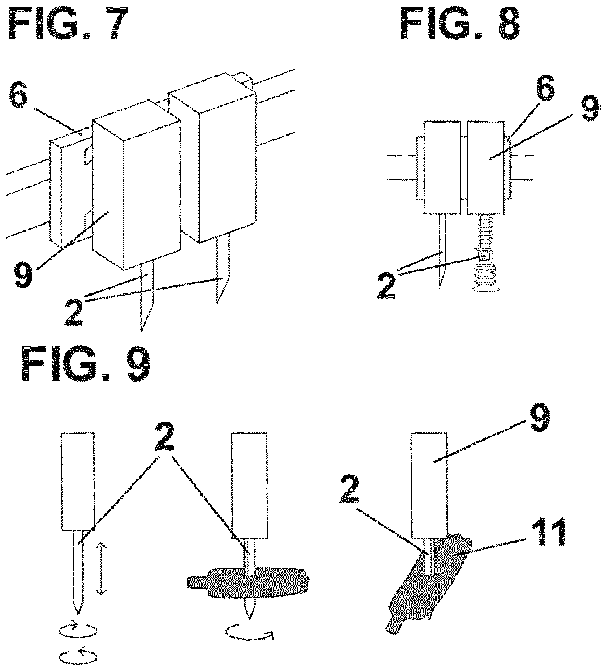

As shown in Figures 7 and 8, a set of multiple catching heads 6 may be formed from two catching heads 9, which may have the same or different catching elements 2.

In turn, each capture module 23 may contain several sets of multiple heads 6 and catching heads 9 with the choice of catching elements 2 suitable for catching different varieties of objects.

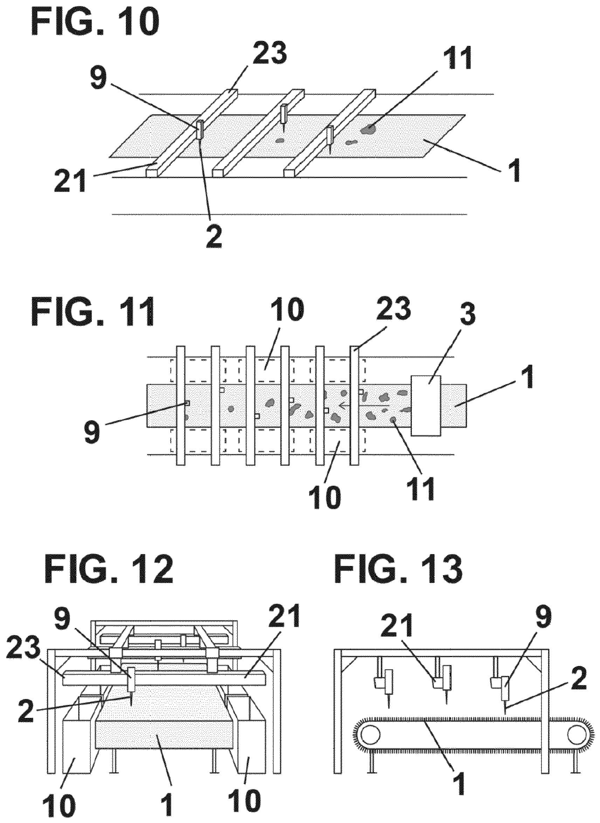

Said catching modules 23 are arranged transversely and parallel, forming a catching array along a conveyor belt 1, as can be seen in figures 10, 11, 12 and 18.

On both sides of said catching modules 23 are collection points 10, which is where the catching heads 9 will deposit the caught objects, as can be seen in figures 11, 12, 18. Said collection points may be of different sizes and may be used by at least one catching module 23 or may be shared by several catching modules 23. For example, in Figure 11 the collection points 10 are shared by two catching modules 23.

This way, the required spatial distribution of catching elements 2 (of different types according to need) and their consequent collection points is achieved, to cover the whole range of the different valid objects to be caught and sorted, as well as to cover the catching and separation of the unwanted ones.

For example, in one possible embodiment, as shown in Figure 11, the conveyor belt 1 is used as an X-axis travel, and the catching elements 2 travel along the Y-Z axes, as described above. This allows multiple catching modules 23 to be installed in parallel along the conveyor belt 1 and each of them can separate different objects or a multitude of improper ones.

The sorting system, according to the present invention, also offers flexibility in the collection of objects 11, as it allows the multiple catching or collection of a catching element 2 and the coordinated work of different catching elements 2 that may belong to the same or to different capture modules 23.

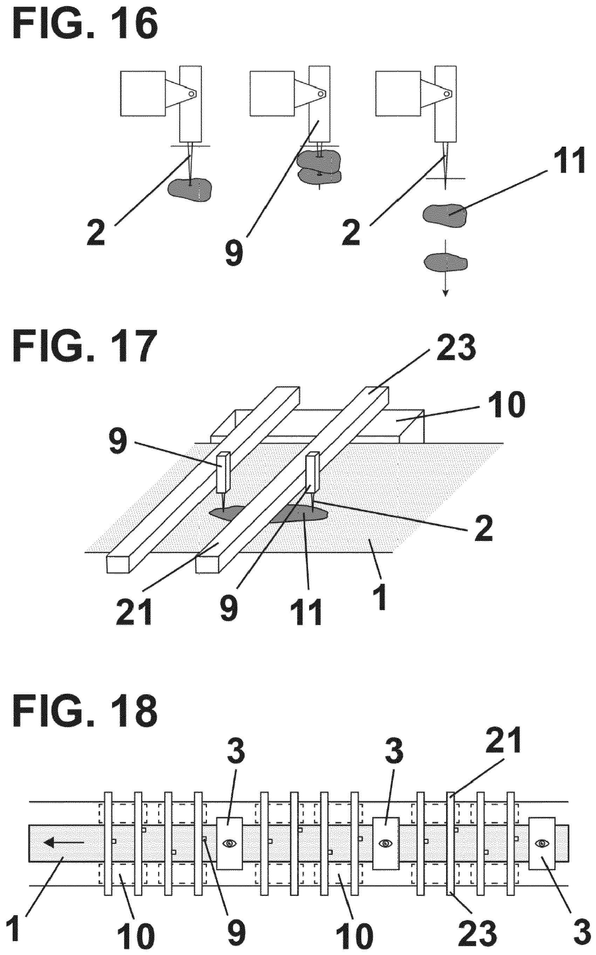

For example, Figure 16 shows that a single catching element 2 can be used to collect or catching more than one object 11, while Figure 17 shows how two catching elements 2, belonging to different catching modules 23, are controlled in a coordinated manner to collect a single larger and/or heavier object.

As an example of modularity, a catching module 23 containing two heads 9 and its two catching elements 2 allows sorting two different types of objects by placing two collection points 10 on each side of the belt 1. Therefore, to sort more objects, several catching modules 23 in parallel and their corresponding collection points 10 would be required. See Figure 11 for an example of collection points 10 shared by two catching modules 23.

As indicated above, each set of multiple catching heads 6 may comprise several catching heads 9 with their catching elements 2, for example, two punches (figure 7), a punch and a suction cup (figure 8), or any combination of the different types of catching elements, as appropriate for each type of material to be sorted.

Each of these catching elements 2 can rotate along its longitudinal axis, as shown in Figure 9, which allows the collected objects to be oriented.

This way, similar objects with the same orientation can be collected consecutively, e.g., a bottle can be punched, and the side of the cap can be oriented. This way, at unloading, the objects can be deposited in the required orientation, so that they can be handled for a station that requires this order or orientation beforehand.

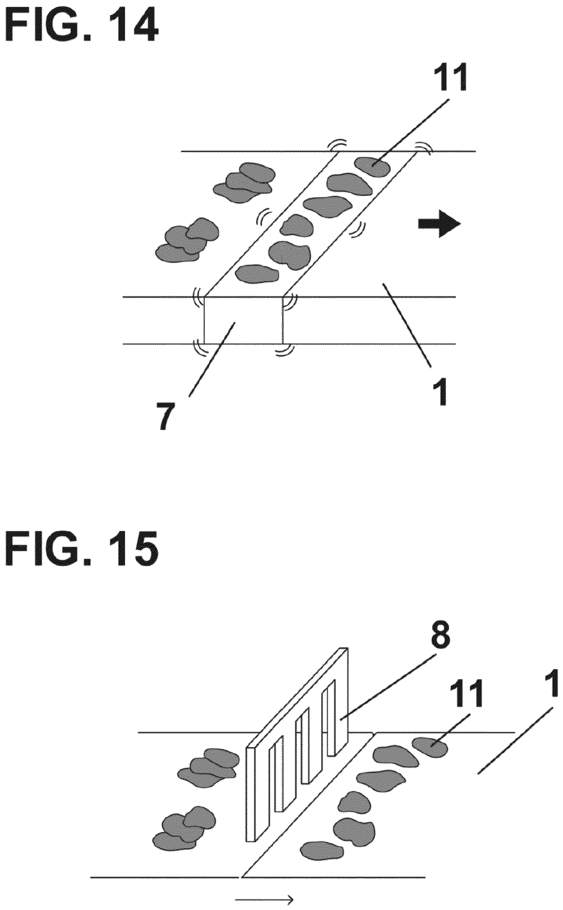

In current sorting systems, it is well known that objects are often piled up and mixed, making it very difficult to clearly detect the objects and to hold a single object in each capture process. For this reason, it is necessary to separate and distribute the material to be collected evenly on the belt 1. For example, by using vibration distributors 7 (figure 14), changes in belt speed, vertical belts 8 (figure 15), increasing the width of the belt 1, etc., in order to minimize the overlap between objects and facilitate the identification and subsequent catching of individual objects.

In this sense, the system for sorting objects of the present invention, because the construction of the catching module 23 allows the transversal movement of the catching heads 9, supports much wider conveyor belt configurations than current systems with delta-type robots, improving the separation and distribution of the objects to be sorted. This allows for clearer and more accurate object detection and cleaner catching of a single object per catching. Ultimately, increasing line capacity and achieving very high overall efficiencies, specifically sorting with more reliability and purity.

The sorting system, in accordance with the present invention, allows objects 11 to be sorted into different categories according to the materials of which they are composed. The segmentation information is provided by detecting elements 3, which may be external to the system or integrated in the system. These detection elements 3 can use different technologies, such as, for example, hyperspectral cameras, multispectral cameras, machine learning based systems, among others. It allows the distinction of different materials and their variants, e.g., types of plastic (PVC, PP, PET, etc.).

These detecting elements 3 are used at the first position of the conveyor belt 1 and are based on vision systems or other alternative sensors to generate the sorting data. Several detecting elements may be interleaved on the same line so that they can communicate and pass information between them.

For example, Figure 18 shows a sorting system comprising several detecting elements 3, placed in the first position of the line with sufficient distance so that the catching elements 2 can execute the previously processed tasks. The first detecting element 3 has the task of detecting the type of material mainly, as well as the measurements, position, etc. of the objects 11 that are on the belt 1. As the belt advances and objects are caught, the rest of the objects that remain on the conveyor belt 1 may undergo movements and move away from the catching position detected by the first detecting element, making it necessary to install more detecting elements 3 to detect the objects and correct the position in the event that there have been movements, and to guarantee a correct catching. These additional detecting elements 3 can be lower cost systems, such as RGB cameras or other sensors, and can complement or correct catching positions based on previous data.

One of the advantages of the system is its high flexibility and scalability, since it allows adapting to the specific or future requirements of the system, changing the number of catching elements 2, either individually in each head 9 or relocating catching modules 23, incorporating or updating detecting elements 3 and modifying the number and type of catching elements 2 dedicated to each type of material as needed, catching elements 2 designed for specific objects, adapting the configuration to the input objects, etc.

The sorting system according to the present invention comprises a software module for optimizing movements on the basis of physical constraints or other parameters, such as quantity, quality, or value.

For example, the system has as inputs:
1. Information of the objects 11 on the conveyor belt 1 from the detecting elements 3, such as position and orientation on the conveyor belt 1, shape, height, center of mass, material, etc.
2. Occupation of each catching head 9 (current position and load status, paths, times) and its capabilities (objects 11 that can be caught by the available catching elements 2 and the zones or collection points10 to which the object 11 can be released).
3. Criteria for the selection of objects, indicating the useful materials, the unwanted materials, and the collection points for each one of them.

Based on different input data, the catching jobs can be generated and assigned to the different catching heads 9 in a synchronized and optimized way, as well as the deposition of these objects 11 at the collection points 10.

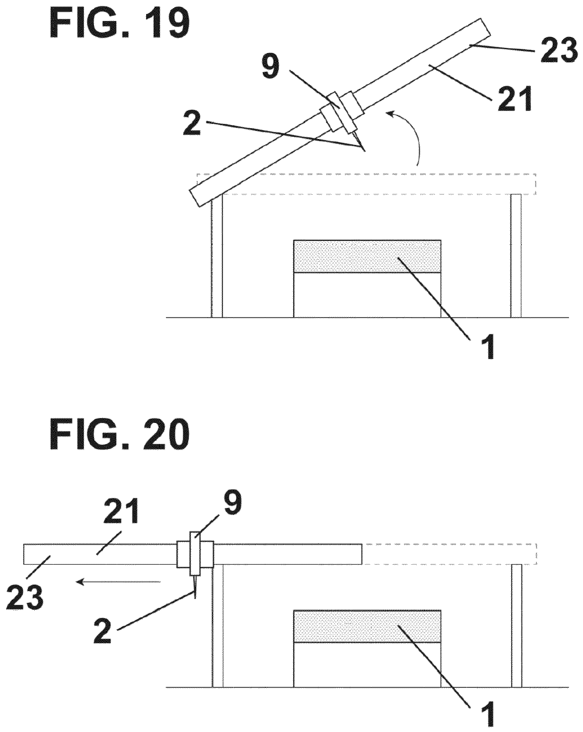

The sorting system, in accordance with the present invention, also allows maintenance without line stoppage. For this purpose, it allows the deactivation of one of the catching modules 23 and reconfigures itself for further operation, for example by exchanging the catching modules for maintenance as shown in Figures 19 or 20.

Although reference has been made to a specific embodiment of the invention, it is obvious to a person skilled in the art that the object classification system described is susceptible to numerous variations and modifications, and that all the details mentioned can be replaced by technically equivalent ones, without departing from the scope of protection defined by the appended claims.

## Claims

1. System for sorting objects, comprising:
- a conveyor belt (1) on which the objects to be sorted are placed;
- at least one detecting element (3) of the objects to be sorted,
- at least one catching element (2) for catching one or more objects to be sorted and removing them from the conveyor belt (1),
- at least one collection point (10),
**characterized in that** the sorting system comprises a plurality of catching elements (2) which are independently movable from each other transversely with respect to the conveyor belt (1).

2. System for sorting objects according to claim 1, wherein the catching elements (2) are movable along one or more transverse guides (21), which are transversal to the conveyor belt (1), forming a set of catching elements (2) coordinated with each other.

3. System for sorting objects according to claim 2, wherein the catching elements (2) are mounted on one or more longitudinal guides (22), which are longitudinal with respect to the conveyor belt (1), the longitudinal guide(s) (22) being movably mounted on a transverse guide (21).

4. System for sorting objects according to any one of the preceding claims, wherein at least some of the catching elements (2) are tiltable with respect to the conveyor belt (1).

5. System for sorting objects according to claim 1, wherein the conveyor belt (1) consists of brushes made of polymers or other materials with elastic bristles.

6. System for sorting objects according to any one of the preceding claims, wherein each catching element (2) comprises at one end a single needle, a multiple needle with gripper effect, a swiveling blade, a suction cup, a magnet, a punch with clamping bracket, a conical punch, a serrated punch, an arrow, or a clamp.

7. System for sorting objects according to any one of the preceding claims, comprising a sharpening element (5) for sharpening one end of the catching elements (2), said sharpening element (5) being movable between a rest position and a use position.

8. System for sorting objects according to any one of the preceding claims, wherein at least some of the catching elements (2) are grouped into sets of multiple catching heads (6), each set of multiple catching heads (6) comprising two or more catching elements (2), which are the same or different from each other.

9. System for sorting objects according to any one of the preceding claims, wherein the catching element (2) is rotatable with respect to the longitudinal axis of the catching element (2).

10. System for sorting objects according to claim 1, wherein the object detecting elements (3) comprise one or more cameras, arranged at one or more points on the conveyor belt (1).

11. System for sorting objects according to any one of the preceding claims, wherein the conveyor belt (1) comprises distribution means (7, 8) for distributing the objects on the conveyor belt (1).

12. System for sorting objects according to claim 11, wherein the distribution means are vertical distribution belts (8) provided with a plurality of through holes or vibrating distributors (7).

13. System for sorting objects according to any one of the preceding claims, wherein the catching elements (2) are removably mounted.
